# EUROPÄISCHE PATENTSCHRIFT

(11) **EP 3 429 924 B1**
(45) Veröffentlichungstag und Bekanntmachung des Hinweises auf die Patenterteilung: **25.03.2020**
(21) Anmeldenummer: 17711199.4
(22) Anmeldetag: 17.03.2017
(51) Int. Cl.: B64F 1/22, B60T 8/26, B60T 8/34, B60T 13/14

(54) **SCHLEPPFAHRZEUG**
TOWING VEHICLE
REMORQUEUR

(30) Priorität: 18.03.2016 DE 102016204543
(43) Veröffentlichungstag der Anmeldung: 23.01.2019
(73) Patentinhaber: Goldhofer AG, 87700 Memmingen (DE)
(72) Erfinder: AZAÑA ROBLES, Pedro Pablo, 87700 Memmingen (DE)
(74) Vertreter: Weickmann & Weickmann PartmbB
(86) Internationale Anmeldenummer: PCT/EP2017/056399
(87) Internationale Veröffentlichungsnummer: WO 2017/158161

(56) Entgegenhaltungen:
- DE-C1- 19 919 878
- US-A- 3 964 794
- US-A- 4 553 788
- US-A- 4 795 004
- US-A- 4 923 253
- US-A1- 2005 134 111
- US-B1- 6 675 920

## Beschreibung

Die Erfindung betrifft ein Schleppfahrzeug zum schleppstangenlosen Manövrieren von Flugzeugen, umfassend ein Fahrgestell, wenigstens eine Vorderachse mit wenigstens zwei Vorderrädern, wenigstens eine Hinterachse mit wenigstens zwei Hinterrädern, und eine Bremsvorrichtung mit einem ersten fluidisch betätigbaren und auf die Vorderräder einwirkenden Bremskreis und einem zweiten fluidisch betätigbaren und auf die Hinterräder einwirkenden Bremskreis.

Derartige Schleppfahrzeuge sind allgemein bekannt. Sie umfassen üblicherweise ein im Wesentlichen U-förmig ausgebildetes Fahrgestell, welches einen Aufnahmeraum für das Bugrad des zu manövrierenden Flugzeugs aufweist. Befindet sich das Bugrad in dem Aufnahmeraum, so kann es mittels einer Greifvorrichtung ergriffen und mittels einer Hubvorrichtung angehoben werden. Die Greifvorrichtung und die Hubvorrichtung bilden zusammen eine Kuppelvorrichtung des Schleppfahrzeugs.

Derartige Schleppfahrzeuge werden beispielsweise dazu eingesetzt, Flugzeuge nach dem Einsteigen der Passagiere, dem Schließen der Türen und dem Zurückziehen der Passagierbrücke von ihrer Parkposition am Terminal zurück auf das Vorfeld zu schieben. Ferner können Flugzeuge mittels derartiger Schleppfahrzeuge in Richtung der Startbahn oder zu Wartungshallen bewegt werden. Schleppstangenlose Schleppfahrzeuge, welche das Bugrad des zu manövrierenden Flugzeugs ergreifen und anheben, haben gegenüber Stangenschleppern den Vorteil, dass sie selbst nur ein vergleichsweise geringes Gewicht aufzuweisen brauchen, da zusätzlich zu ihrem Eigengewicht auch die Last des Bugrads auf sie übertragen wird, was ihre Traktion auf der Fahrfläche erhöht.

Gleichwohl kann im Betrieb dieser Schleppfahrzeuge der sogenannte "Klappmessereffekt" auftreten, im Englischen auch "jack-knifing effect" genannt. Dieser Effekt kann beim Bremsen des Schleppfahrzeugs, insbesondere bei einer Vollbremsung, auftreten, wenn die Hinterräder des Schleppfahrzeugs die zur Verfügung stehende Haftreibungskraft voll und ganz zum Bremsen einsetzen müssen, sodass kein Kraftanteil mehr für die Seitenführung der Hinterräder zur Verfügung steht. In diesem Zustand besteht die Gefahr, dass die Hinterräder seitlich rutschen, so dass das Heck des Schleppfahrzeugs ausbricht und sich das gesamte Schleppfahrzeug um die von der Bugrad-Aufhängung des Flugzeugs gebildete Achse dreht. Dabei besteht nicht nur für die Radaufhängung des Bugrads, sondern auch für den Rumpf des Flugzeugs die Gefahr einer Beschädigung.

Die Gefahr des Auftretens des Klappmessereffektes besteht insbesondere dann, wenn auf dem Bugrad des Flugzeugs, beispielsweise aufgrund einer hecklastigen Beladung und/oder Betankung des Flugzeugs, nur wenig Last ruht.

Der Klappmessereffekt ist auch von Sattelzügen her bekannt. Dort wird ihm üblicherweise mittels elektronischer Stabilisierungssysteme entgegengewirkt, welche unter anderem auch auf die Bremskreise des Sattelaufliegers einwirken und so den Zug weitestgehend gestreckt halten. Der Einsatz derartiger Stabilisierungssysteme ist im Bereich von Schleppfahrzeugen zum stangenlosen Manövrieren von Flugzeugen nicht möglich, da das Schleppgespann einzig und allein vom Schleppfahrzeug gebremst wird, wobei das Flugzeug die Rolle eines ungebremsten Sattelaufliegers übernimmt.

Die Druckschrift US 4 923 253 A offenbart ein Schleppfahrzeug der gattungsgemäßen Art, welches zwei fluidisch betätigbare Bremskreise umfasst, die jeweils sowohl auf die Vorderachse als auch auf die Hinterachse einwirken.

Ferner sei auf die US 4 795 004 A und die US 4 553 788 A verwiesen.

Es ist daher Aufgabe der vorliegenden Erfindung, Schleppfahrzeuge der eingangs genannten Art derart weiterzubilden, dass dem Klappmessereffekt entgegengewirkt wird.

Diese Aufgabe wird erfindungsgemäß durch ein Schleppfahrzeug nach Anspruch 1 gelöst.

In diesem Fall können die beiden durch die Zulassungsvorschriften vorgeschriebenen Bremskreise von dem ersten und dem dritten Bremskreis gebildet werden, die beide auf beide Vorderräder einwirken. Durch entsprechende Ansteuerung des auf die beiden Hinterräder einwirkenden zweiten Bremskreises kann, sofern dieser überhaupt angesteuert wird, sichergestellt werden, dass die an den Hinterrädern zur Verfügung stehende Traktionskraft zumindest teilweise, vorzugsweise sogar vollständig, zur Seitenführung der Hinterräder verwendet werden kann.

Zwar sind im Stand der Technik Radbremseinheiten bekannt, welche zwei Bremskreisen zugeordnet sein können. Und grundsätzlich ist es auch im Zusammenhang mit der vorliegenden Erfindung denkbar, derartige Radbremseinheiten an den Vorderrädern des Schleppfahrzeugs anzuordnen. Aufgrund der hohen Bremskräfte, die beim Bremsen eines von einem Schleppfahrzeug und einem Flugzeug gebildeten Schleppzugs auftreten können und von den Bremssätteln über die Bremsbeläge auf die Bremsscheiben übertragen werden müssen, ist es jedoch vorteilhaft, wenn wenigstens einem, vorzugsweise jedem, der Vorderräder zwei Radbremseinheiten zugeordnet sind, von denen die eine Teil des ersten Bremskreises und die andere Teil des dritten Bremskreises ist. In diesem Fall ist es nämlich in konstruktiv einfacher Weise möglich, den zum Bremsen erforderlichen Flächendruck, der sich aus der auf die Bremsbeläge ausgeübten Klemmkraft bzw. der auf die Bremsbacken ausgeübten Spreizkraft ergibt, gering zu halten, so dass aus herkömmlichen Materialien gefertigte Bremsbeläge bzw. Bremsbacken eingesetzt werden können. Dies wirkt sich vorteilhaft auf die Herstellungs- und Wartungskosten des erfindungsgemäßen Schleppfahrzeugs aus.

Wie vorstehend bereits angedeutet wurde, wird der den Hinterrädern zugeordnete zweite Bremskreis nur dann zum Bremsen des Schleppfahrzeugs eingesetzt, wenn es unbedingt erforderlich ist. Daher ist erfindungsgemäß vorgesehen, dass die Bremsvorrichtung eine Steuereinheit umfasst, welche dazu ausgelegt ist, die Radbremseinheiten des zweiten Bremskreises nur dann anzusteuern, wenn das zulässige Gesamtgewicht des Flugzeugs einen vorbestimmten Wert überschreitet. Dieser vorbestimmte Wert kann beispielsweise 200 t betragen. Liegt das zulässige Gesamtgewicht des Flugzeugs unterhalb des vorbestimmten Werts, so reicht die Bremsleistung der beiden Vorderachsbremskreise, d.h. des ersten und dritten Bremskreises, aus, um das aus Schleppfahrzeug und Flugzeug gebildete Gespann sicher bremsen zu können. In diesem Fall kann die über die Räder der Hinterachse auf die Fahrfläche übertragbare Kraft voll und ganz zur Seitenführung genutzt werden. Liegt das zulässige Gesamtgewicht des Flugzeugs jedoch oberhalb des vorbestimmten Werts, so kann auch der der Hinterachse zugeordnete zweite Bremskreis zum Bremsen herangezogen werden.

Gleichwohl kann auch in dieser Situation eine ausreichende Seitenführung der Hinterräder gewährleistet werden. Aufgrund des höheren Gewichts des Flugzeugs übt auch das Bugrad eine entsprechend höhere Bugradlast auf das Schleppfahrzeug aus. Dies erhöht den Betrag der insgesamt zur Verfügung stehenden Haftreibungskraft der Hinterräder. Da zur Gewährleistung der Seitenführung eine vorbestimmte Führungskraft ausreicht, kann der die vorbestimmte Führungskraft übersteigende Anteil der Haftreibungskraft zum Bremsen genutzt werden.

Beim Ankuppeln des Flugzeugs an das Schleppfahrzeug wird beim Ergreifen des Bugrads üblicherweise dessen Durchmesser bestimmt und dem Fahrer auf einer Anzeige eine Auswahl von Flugzeugtypen angezeigt, deren Bugräder einen entsprechenden Durchmesser aufweisen. Der Ankuppelvorgang wird erst dann fortgesetzt, d.h. das Bugrad wird erst dann angehoben, wenn der Fahrer den jeweiligen Flugzeugtyp eingegeben und bestätigt hat. Diese Information kann erfindungsgemäß auch an die vorstehend erwähnte Steuereinheit der Bremsvorrichtung weitergeleitet werden, die auf Grundlage dieser Information das zulässige Gesamtgewicht des Flugzeugs ermittelt. Alternativ ist es selbstverständlich auch möglich, dass der Steuereinheit der Bremsvorrichtung in Abhängigkeit von dem vom Fahrer eingegebenen Flugzeugtyp unmittelbar dessen zulässiges Gesamtgewicht übermittelt wird.

Nachzutragen ist noch, dass die Räder wenigstens einer der Achsen des Schleppfahrzeugs lenkbare Räder sind.

Die Erfindung wird im Folgenden an einem Ausführungsbeispiel anhand der beigefügten Zeichnung näher erläutert werden. Es stellt dar:
- Figur 1: eine teilweise geschnittene Seitenansicht eines erfindungsgemäßen Schleppfahrzeugs;
- Figur 2: eine Draufsicht auf das Schleppfahrzeug gemäß Figur 1, allerdings ohne Darstellung des Bugrads des Flugzeugs; und
- Figur 3: eine schematische Darstellung zur Erläuterung der Bremsvorrichtung des erfindungsgemäßen Schleppfahrzeugs.

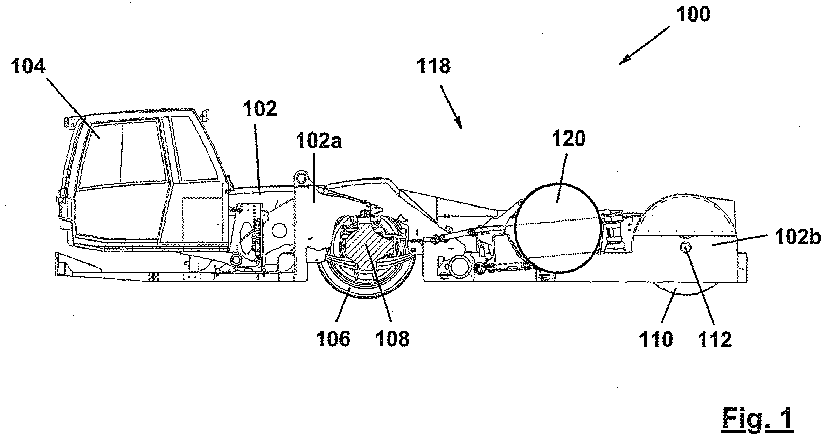

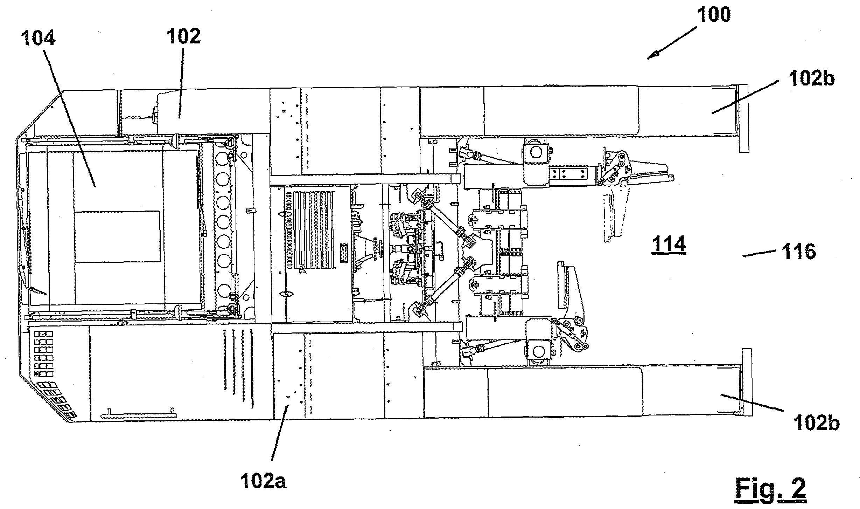

In den Figuren 1 und 2 ist ein erfindungsgemäßes Schleppfahrzeug ganz allgemein mit 100 bezeichnet. Das Schleppfahrzeug 100 umfasst ein im Wesentlichen U-förmig ausgebildetes Fahrgestell 102 mit einer Fahrerkabine 104. Die Räder 106 einer Vorderachse 108 des Schleppfahrzeugs 100 sind einem Basisschenkel 102a der U-Form des Fahrgestells 102 zugeordnet. In analoger Weise sind die Räder 110 einer Hinterachse 112 des Schleppfahrzeugs 100 jeweils einem der Seitenschenkel 102b der U-Form des Fahrgestells 102 zugeordnet. Die beiden Seitenschenkel 102b umschließen mit dem Basisschenkel 102a einen Aufnahmeraum 114, der am hinteren Ende des Schleppfahrzeugs 100 eine Aufnahmeöffnung 116 aufweist. In dem Aufnahmeraum 114 ist eine Kupplungsvorrichtung 118 angeordnet, welche zum Ergreifen und Anheben eines in dem Aufnahmeraum 114 angeordneten Bugrads 120 dient. Der Aufbau und die Funktion der Kupplungsvorrichtung 118 sind an sich bekannt und sollen daher hier nicht näher erläutert werden.

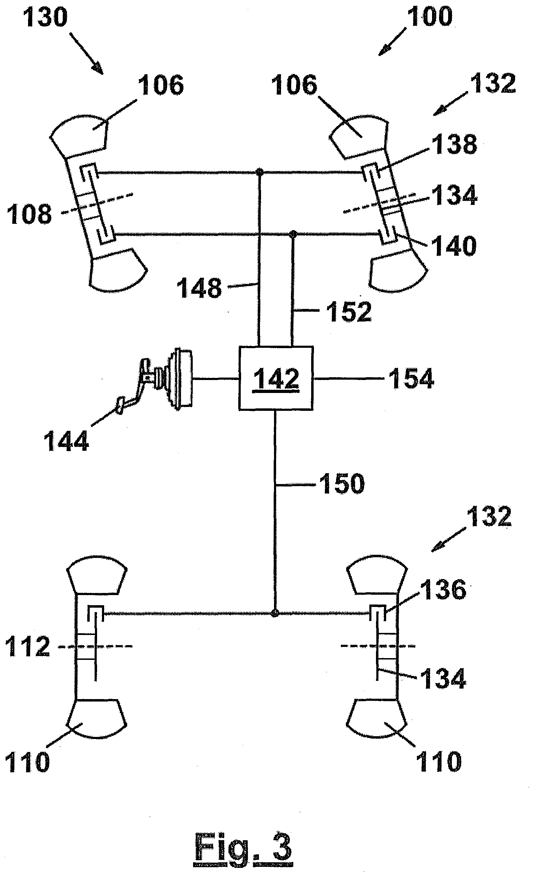

In Figur 3 ist die Bremsvorrichtung 130 des Schleppfahrzeugs 100 schematisch dargestellt. Jedem der Räder 106 bzw. 110 des Schleppfahrzeugs 100 ist eine Bremsanordnung 132 zugeordnet, welche eine an dem Rad 106 bzw. 110 befestigte Bremsscheibe 134 umfasst. Ferner umfassen die Bremsanordnungen 132 der Hinterräder 110 jeweils einen Bremssattel 136, und umfassen die Bremsanordnungen 132 der Vorderräder 106 jeweils zwei Bremssättel 138 und 140. Die über (nicht dargestellte) Bremsbeläge mit den Bremsscheiben 134 zusammenwirkenden Bremssättel 136, 138, 140 bilden die Radbremseinheiten im Sinne der vorliegenden Anmeldung.

Ferner umfasst die Bremsvorrichtung 130 eine Steuereinheit 142, welcher von einer Bremsbetätigungseinrichtung 144 ein Bremsbetätigungssignal zugeführt wird. Von der Steuereinheit 142 gehen drei Bremskreise aus, nämlich ein erster Bremskreis 148, der zu den Bremssätteln 138 der beiden Vorderräder 106 führt, ein zweiter Bremskreis 150, der zu den Bremssätteln 136 der beiden Hinterräder 110 führt, und ein dritter Bremskreis 152, der zu den Bremssätteln 140 der beiden Vorderräder 106 führt. Ferner kann der Steuereinheit 142 über eine Signalleitung 154 eine Information zugeführt werden, die das zulässige Gesamtgewicht des jeweils angekuppelten Flugzeugs angibt bzw. aus welcher dieses zulässige Gesamtgewicht ermittelt werden kann.

Beispielsweise kann die Steuereinheit 142 die drei Bremskreise 148, 150 und 152 derart ansteuern, dass dann, wenn das zulässige Gesamtgewicht des Flugzeugs einen vorbestimmten Wert, beispielsweise 200 t, nicht überschreitet, zum Bremsen nur der erste Bremskreis 148 und der dritte Bremskreis 152 verwendet werden, d.h. das Schleppfahrzeug 100 ausschließlich über die Räder 106 der Vorderachse 108 gebremst wird. In diesem Fall kann die Haftreibungskraft der Hinterräder 110 voll und ganz für die Seitenführung genutzt werden. Übersteigt das zulässige Gesamtgewicht des Flugzeugs den vorbestimmten Wert, so kann die Steuereinheit 142 auch den den Hinterrädern 110 zugeordneten Bremskreis 150 zum Bremsen einsetzen. Gleichwohl kann auch in dieser Situation eine ausreichende Seitenführung der Hinterräder 110 gewährleistet werden. Aufgrund des höheren Gewichts des Flugzeugs übt das Bugrad eine entsprechend höhere Bugradlast auf das Schleppfahrzeug 100 aus. Dies erhöht die insgesamt zur Verfügung stehende Haftreibungskraft der Hinterräder 110. Da zur Gewährleistung der Seitenführung eine vorbestimmte Führungskraft ausreicht, steht daher der diese vorbestimmte Führungskraft übersteigende Anteil der Haftreibungskraft zum Bremsen zur Verfügung.

Nachzutragen ist noch, dass, obgleich die Radbremseinheiten in dem vorstehenden Ausführungsbeispiel alle schematisch als Bremssättel 136, 138, 140 von Scheibenbremsen dargestellt sind, auch andere Bremsentypen eingesetzt werden können, beispielsweise Trommelbremsen oder Lamellenbremsen. In einer konkreten Ausführungsform könnten beispielsweise den Vorderrädern 106 Scheibenbremsen zugeordnet sein, während den Hinterrädern 110 Trommelbremsen zugeordnet sind.

## Patentansprüche

1. Schleppfahrzeug (100) zum schleppstangenlosen Manövrieren von Flugzeugen, umfassend
∘ ein Fahrgestell (102),
∘ wenigstens eine Vorderachse (108) mit wenigstens zwei Vorderrädern (106),
∘ wenigstens eine Hinterachse (112) mit wenigstens zwei Hinterrädern (110), und
∘ eine Bremsvorrichtung (130) mit einem ersten fluidisch betätigbaren und auf die Vorderräder (106) einwirkenden Bremskreis (148) und einem zweiten fluidisch betätigbaren und auf die Hinterräder (110) einwirkenden Bremskreis (150),
**dadurch gekennzeichnet, dass** die Bremsvorrichtung (130) ferner einen dritten fluidisch betätigbaren Bremskreis (152) umfasst, der ebenfalls auf die Vorderräder (106) einwirkt, und
dass die Bremsvorrichtung (130) eine Steuereinheit (142) umfasst, welche dazu ausgelegt ist, die Radbremseinheiten (136) des zweiten Bremskreises (150) nur dann anzusteuern, wenn das zulässige Gesamtgewicht des Flugzeugs einen vorbestimmten Wert überschreitet, und dann, wenn das zulässige Gesamtgewicht des Flugzeugs den vorbestimmten Wert nicht überschreitet, zum Bremsen nur den ersten Bremskreis (148) und den dritten Bremskreis (152) anzusteuern, so dass das Schleppfahrzeug (100) ausschließlich über die Räder (106) der Vorderachse (108) gebremst wird.

2. Schleppfahrzeug nach Anspruch 1,
**dadurch gekennzeichnet, dass** wenigstens einem, vorzugsweise jedem, der Vorderräder (106) zwei Radbremseinheiten (138, 140) zugeordnet sind, von denen die eine (138) Teil des ersten Bremskreises (148) und die andere (140) Teil des dritten Bremskreises (152) ist.

3. Schleppfahrzeug nach Anspruch 1 oder 2,
**dadurch gekennzeichnet, dass** das Fahrgestell (102) des Schleppfahrzeugs (100) im Wesentlichen U-förmig ausgebildet ist und einen Aufnahmeraum (114) umschließt, der eine zwischen den beiden freien Enden der Seitenschenkel (102b) der U-Form gebildeten Aufnahmeöffnung (116) aufweist, und ferner eine Kupplungsvorrichtung (118) zum Ergreifen und Anheben des Bugrads (120) eines zu manövrierenden Flugzeugs umfasst.

## Claims

1. Towing vehicle (100) for manoeuvring aircraft without using a tow bar, comprising
∘ a chassis (102),
∘ at least one front axle (108) having at least two front wheels (106),
∘ at least one rear axle (112) having at least two rear wheels (110), and
∘ a braking device (130) having a first fluidically actuatable brake circuit (148) which acts on the front wheels (106) and a second fluidically actuatable brake circuit (150) which acts on the rear wheels (110),
**characterised in that** the braking device (130) further comprises a third fluidically actuatable brake circuit (152) which also acts on the front wheels (106), and
**in that** the braking device (130) comprises a control unit (142) which is designed to control the wheel brake units (136) of the second brake circuit (150) only when the permissible total weight of the aircraft exceeds a predetermined value, and, when the permissible total weight of the aircraft does not exceed the predetermined value, to control only the first brake circuit (148) and the third brake circuit (152) in order to brake, such that the towing vehicle (100) is braked exclusively by means of the wheels (106) of the front axle (108).

2. Towing vehicle according to claim 1,
**characterised in that** two wheel brake units (138, 140) are associated with at least one, preferably each, of the front wheels (106), one (138) of which is part of the first brake circuit (148) and the other (140) of which is part of the third brake circuit (152).

3. Towing vehicle according to either claim 1 or claim 2,
**characterised in that** the chassis (102) of the towing vehicle (100) is substantially U-shaped and encloses a receiving space (114) which has a receiving opening (116) formed between the two free ends of the side legs (102b) of the U-shape, and further comprises a coupling device (118) for gripping and lifting the nose wheel (120) of an aircraft to be manoeuvred.

## Revendications

1. Véhicule de remorquage (100) pour la manœuvre sans tige de remorquage d'avions, comprenant
• un châssis (102),
• au moins un essieu avant (108) avec au moins deux roues avant (106),
• au moins un essieu arrière (112) avec au moins deux roues arrière (110) et
• un dispositif de freinage (130) avec un premier circuit de freinage (148) pouvant être actionné par un fluide et agissant sur les roues avant (106) et un deuxième circuit de freinage (150) pouvant être actionné par un fluide et agissant sur les roues arrière (110),
**caractérisé en ce que** le dispositif de freinage (130) comprend en outre un troisième circuit de freinage (152) pouvant être actionné par un fluide et qui agit également sur les roues avant (106) et
le dispositif de freinage (130) comprend une unité de commande (142) qui est conçue pour contrôler les unités de freinage des roues (136) du deuxième circuit de freinage (150) uniquement lorsque le poids total admissible de l'avion dépasse une valeur prédéterminée et, lorsque le poids total admissible de l'avion ne dépasse pas la valeur prédéterminée, pour contrôler, pour le freinage, uniquement le premier circuit de freinage (148) et le troisième circuit de freinage (152), de façon à ce que le véhicule de remorquage (100) soit freiné exclusivement par l'intermédiaire des roues (106) de l'essieu avant (108).

2. Véhicule de remorquage selon la revendication 1,
**caractérisé en ce qu'**à au moins une, de préférence à chacune des roues avant (106), correspondent deux unités de freinage de roues (138, 140), dont une (138) fait partie du premier circuit de freinage (148) et l'autre (140) fait partie du troisième circuit de freinage (152).

3. Véhicule de remorquage selon la revendication 1 ou 2,
**caractérisé en ce que** le châssis (102) du véhicule de remorquage (100) est conçu globalement en forme de U et entoure un espace de logement (114) qui comprend une ouverture de logement (116) formée entre les deux extrémités libres des branches latérales (102b) de la forme en U et comprend en outre un dispositif de couplage (118) pour la saisie et le levage du train avant (120) d'un avion à manœuvrer.
